# EUROPEAN PATENT APPLICATION

(11) **EP 4 786 689 A1**
(43) Date of publication of application: **05.08.2026**
(21) Application number: 24871331.5
(22) Date of filing: 11.04.2024
(51) Int. Cl.: E02F 9/02, B62D 21/18, B62D 55/10

(54) **WORK MACHINE**

(30) Priority: 29.09.2023 JP 2023170326
(71) Applicant: Hitachi Construction Machinery Co., Ltd., Tokyo 110-0015 (JP)
(72) Inventor: OONUKI, Masaaki, Tsuchiura-shi, Ibaraki 300-0013 (JP); TADA, Shigeya, Tsuchiura-shi, Ibaraki 300-0013 (JP); ITOU, Kei, Tsuchiura-shi, Ibaraki 300-0013 (JP); HIRATA, Kazuya, Tsuchiura-shi, Ibaraki 300-0013 (JP)
(74) Representative: MERH-IP Matias Erny Reichl Hoffmann Patentanwälte PartG mbB
(86) International application number: PCT/JP2024/014684
(87) International publication number: WO 2025/069515

(57) **Abstract**

The frame coupling mechanism (16) for connecting the left side frame (11) to the left front mounting leg (7) is attached to the left side frame (11) and includes a guide member (17) that forms a space (19) between it and the flange portion (7A) of the left front mounting leg (7), a wedge member (20) installed between the flange portion (7A) and the guide member (17) that contacts the flange portion (7A) by moving along the guide member (17) within the space (19), and a block body (21) installed on the guide member (17) that limits the movement of the wedge member (20) at the position where the wedge member (20) contacts both the flange portion (7A) and the guide member (17).

## Description

### TECHNICAL FIELD

The present disclosure relates to work machines such as hydraulic excavators, and more particularly to work machines with a lower travel body where the spacing between the left and right side frames is variable.

### BACKGROUND ART

A hydraulic excavator, which is representative of work machines, comprises a self-propelled lower travel body and an upper swing body mounted on the lower travel body in a rotatable manner, with a working device for excavation work and the like installed on the front side of the upper swing body. The lower travel body of the hydraulic excavator includes a center frame to which the upper swing body is attached, and side frames arranged on both the left and right sides of the center frame. The center frame is formed with mounting legs that extend in the lateral direction, and the side frames are attached to these mounting legs.

There are models of hydraulic excavators where the width dimension of the lower travel body (the spacing between the left and right side frames) can be varied by changing the mounting position of the side frames relative to the center frame. When transporting this type of hydraulic excavator on a transport vehicle to a work site, the width dimension of the lower travel body can be shortened to fit within the transport restriction width. Furthermore, when performing excavation work with the hydraulic excavator, the stability of the vehicle body can be enhanced by extending the width dimension of the lower travel body.

In a structure where the mounting legs of the center frame and the side frames are fastened using multiple bolts, typically, multiple bolts inserted through bolt insertion holes in the mounting legs are screwed into bolt holes in the side frames. Therefore, by arranging multiple bolt insertion holes and bolt holes at equal intervals in the lateral direction (width direction), the mounting position of the side frames relative to the mounting legs can be moved in the lateral direction within the range of the bolt holes and bolt insertion holes, allowing the width dimension of the lower travel body to be variable. However, in this structure, changing the width dimension of the lower travel body requires the cumbersome task of attaching and detaching multiple bolts, resulting in poor workability.

In contrast, the structure of attaching a side frame to a center frame by inserting the mounting leg of the center frame into a fitting hole formed in the side frame is known. According to this structure, by changing the insertion amount of the mounting legs into the fitting holes, the width dimension of the lower travel body can be varied without performing the task of attaching and detaching bolts (Patent Document 1).

### PRIOR ART DOCUMENT

### PATENT DOCUMENT

Patent Document 1: JP 2018-017047 A

### SUMMARY OF THE INVENTION

However, in the conventional technology of Patent Document 1, a gap is required between the fitting hole and the mounting leg to insert and remove the mounting leg from the fitting hole formed in the side frame, resulting in a gap at the connection between the mounting leg of the center frame and the side frame. Therefore, when performing excavation work using a working device with the width dimension of the lower travel body extended, there is a problem where vehicle vibration (backlash) occurs due to the gap formed at the connection between the mounting legs of the center frame and the side frame, leading to a decrease in the workability of the excavation work.

The present invention has been made in view of the problems of the conventional technology described above, and its object is to provide a work machine that can suppress the gap occurring at the connection between the mounting leg of the center frame and the side frame.

The work machine of the present invention comprises a self-propelled lower travel body and an upper swing body mounted on the lower travel body in a rotatable manner. The lower travel body of the work machine includes a center frame having a frame body to which the upper swing body is attached and mounting legs with flange portions formed at the protruding ends in the lateral direction, side frames arranged on both sides of the center frame and attached to the flange portions, and a frame coupling mechanism for connecting the side frames to the mounting legs. Furthermore, the frame coupling mechanism of the work machine includes a guide member attached to the side frame and forming a space with the flange portion, a wedge member installed between the flange portion and the guide member, which moves along the guide member within the space to contact the flange portion and the guide member, and a stopper member formed on the guide member to limit the movement of the wedge member at the position where the wedge member contacts the flange portion and the guide member.

According to the present invention, since the wedge member is inserted into the space formed between the flange portion of the mounting leg and the guide member, the wedge member contacts the flange portion and the guide member. This allows the side frame to be connected to the flange portion of the mounting leg without any gap.

### BRIEF DESCRIPTION OF THE DRAWINGS

[FIG. 1] is a left side view showing a hydraulic excavator according to an embodiment of the present invention.
[FIG. 2] is a plan view showing the lower travel body with the tracks removed and the side frame spacing extended.
[FIG. 3] is a plan view showing the lower travel body with the tracks removed and the side frame spacing shortened.
[FIG. 4] is an enlarged plan view showing the frame coupling mechanism according to the first embodiment arranged in part IV of FIG. 2.
[FIG. 5] is a left side view of the left front mounting leg, left side frame, and frame coupling mechanism as seen from the direction of arrow V-V in FIG. 4.
[FIG. 6] is an exploded perspective view showing the left front mounting leg, left side frame, and frame coupling mechanism.
[FIG. 7] is an exploded perspective view showing the guide member, wedge member, and stopper member of the frame coupling mechanism.
[FIG. 8] is a cross-sectional view of the flange portion of the left front mounting leg, left side frame, and frame coupling mechanism as seen from the direction of arrow VIII-VIII in FIG. 4.
[FIG. 9] is a cross-sectional view at the same position as FIG. 8, showing the state where the wedge member is detached from the flange portion.
[FIG. 10] is a cross-sectional view of the flange portion, guide member, wedge member, stopper member, shim, etc., as seen from the direction of arrow X-X in FIG. 8.
[FIG. 11] is a cross-sectional view of the flange portion, guide member, wedge member, etc., as seen from the direction of arrow XI-XI in FIG. 8.
[FIG. 12] is an enlarged plan view showing the frame coupling mechanism according to the second embodiment along with the left front mounting leg.
[FIG. 13] is a left side view of the left front mounting leg, left side frame, and frame coupling mechanism as seen from the direction of arrow XIII-XIII in FIG. 12.
[FIG. 14] is a cross-sectional view of the flange portion of the left front mounting leg, left side frame, and frame coupling mechanism as seen from the direction of arrow XIV-XIV in FIG. 12.
[FIG. 15] is a cross-sectional view at the same position as FIG. 14, showing the state where the wedge member is detached from the flange portion.
[FIG. 16] is a cross-sectional view of the flange portion, guide member, wedge member, stopper member, biasing member, etc., as seen from the direction of arrow XVI-XVI in FIG. 14.
[FIG. 17] is an enlarged plan view showing the frame coupling mechanism according to the third embodiment along with the left front mounting leg.
[FIG. 18] is a left side view of the left front mounting leg, left side frame, and frame coupling mechanism as seen from the direction of arrow XVIII-XVIII in FIG. 17.
[FIG. 19] is a cross-sectional view of the flange portion of the left front mounting leg, left side frame, and frame coupling mechanism as seen from the direction of arrow XIX-XIX in FIG. 17.
[FIG. 20] is a cross-sectional view of the flange portion, guide member, wedge member, wedge pressing member, wedge return member, etc., as seen from the direction of arrow XX-XX in FIG. 19.
[FIG. 21] is a cross-sectional view at the same position as FIG. 19, showing the state where the wedge member is detached from the flange portion.
[FIG. 22] is a cross-sectional view of the flange portion, guide member, wedge member, wedge pressing member, wedge return member, etc., as seen from the direction of arrow XXII-XXII in FIG. 21.

### MODE FOR CARRYING OUT THE INVENTION

Hereinafter, a hydraulic excavator will be taken as an example of a work machine according to an embodiment of the present invention, and will be described in detail with reference to the accompanying drawings. In the embodiment, the traveling direction of the hydraulic excavator is described as the longitudinal direction, and the direction orthogonal to the traveling direction is described as the lateral direction.

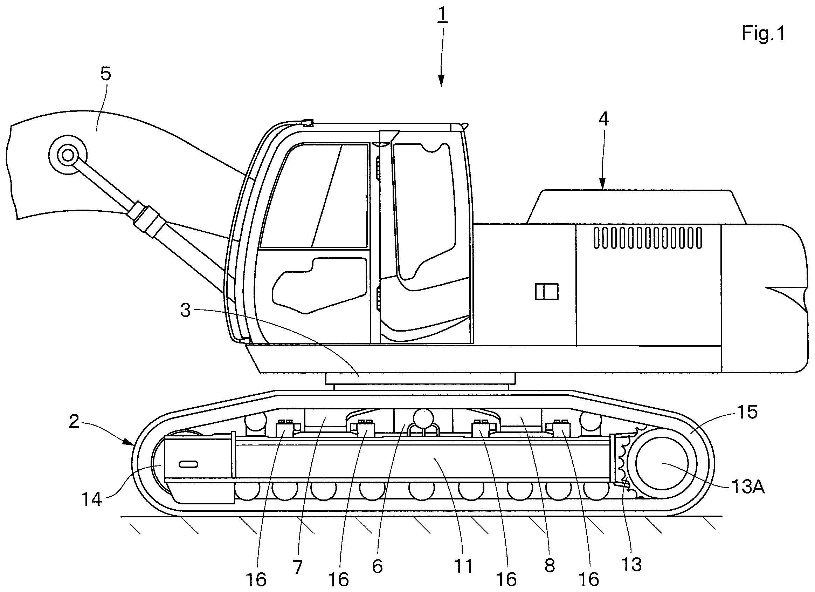

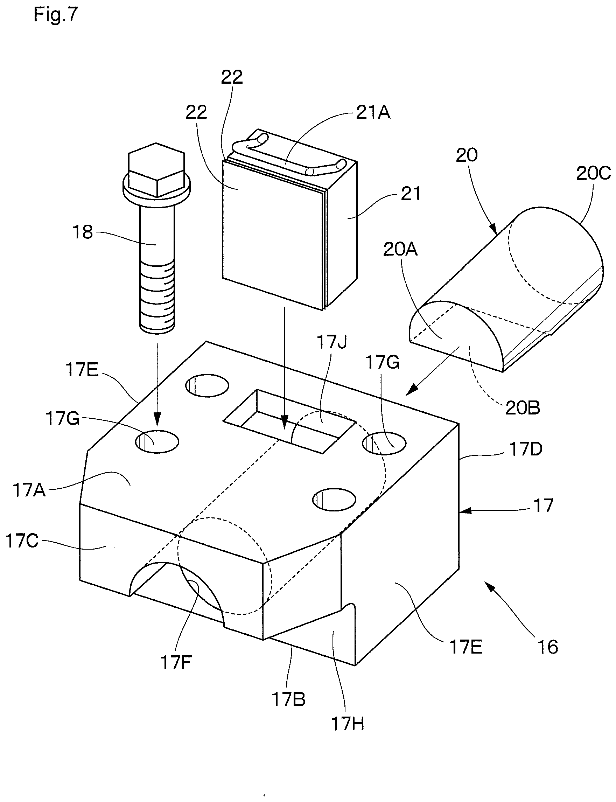

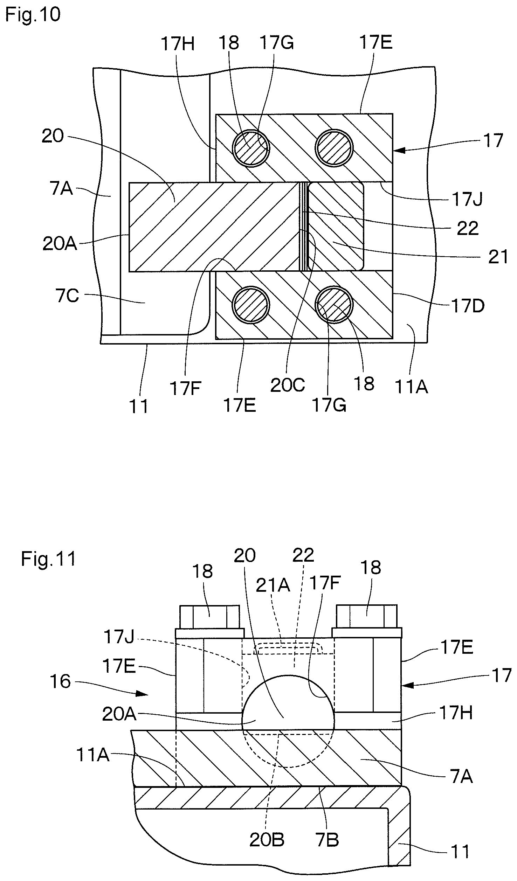

FIGS. 1 to 11 show the first embodiment of the present invention. In FIG. 1, the hydraulic excavator 1 comprises a self-propelled crawler-type lower travel body 2, an upper swing body 4 mounted on the lower travel body 2 in a rotatable manner via a swing wheel 3, and a working device 5 attached on the front side of the upper swing body 4 in a rotatable manner. The hydraulic excavator 1 self-propels to the work site using the lower travel body 2, and performs excavation work and the like using the working device 5 while rotating the upper swing body 4.

The lower travel body 2 comprises a center frame 6 to which the upper swing body 4 is attached, left front mounting leg 7, left rear mounting leg 8, right front mounting leg 9, and right rear mounting leg 10 extending laterally from the center frame 6, and left side frame 11 and right side frame 12 arranged on both sides of the center frame 6. The left side frame 11 is attached to the left front mounting leg 7 and left rear mounting leg 8, and the right side frame 12 is attached to the right front mounting leg 9 and right rear mounting leg 10.

At one end in the longitudinal direction of the left side frame 11 and the right side frame 12, a drive wheel 13 is arranged, and the drive wheel 13 is rotationally driven by the travel device 13A. At the other end in the longitudinal direction of the left side frame 11 and the right side frame 12, an idler wheel 14 is rotatably attached. An endless crawler 15 is wound around the drive wheel 13 and the idler wheel 14 provided on the left side frame 11 and the right side frame 12. The crawler 15 circulates by rotating the drive wheel 13 with the travel device 13A, allowing the lower travel body 2 to stably travel over uneven terrain.

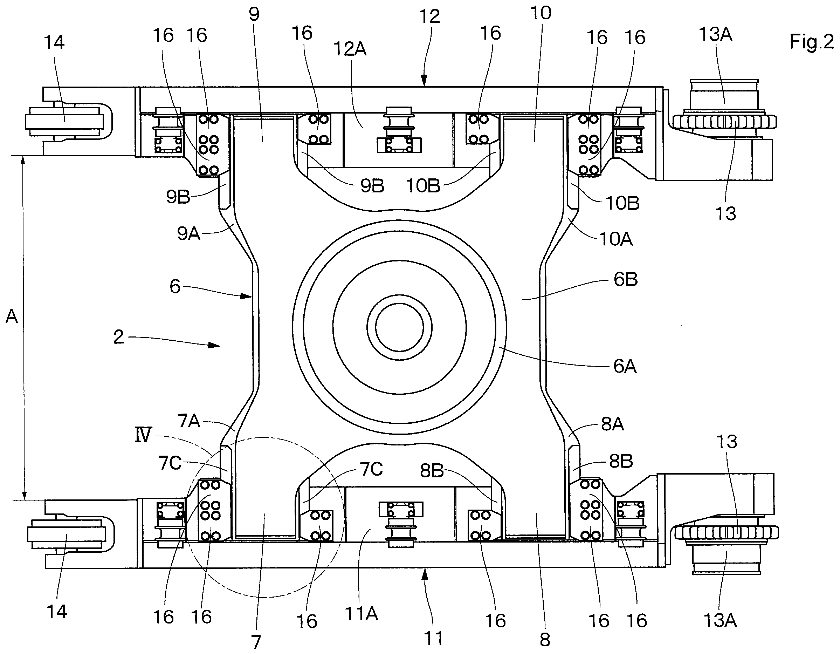

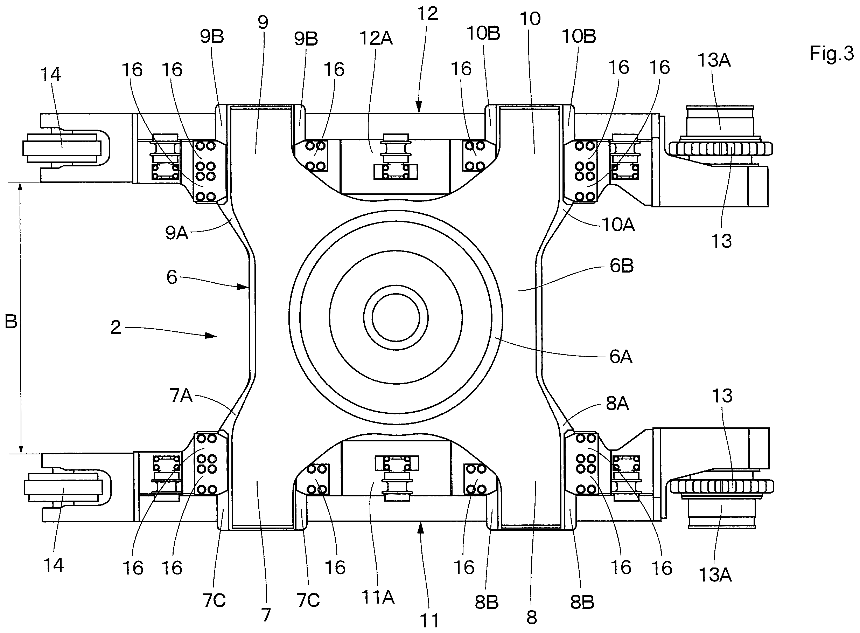

Here, the width dimension of the lower travel body 2 can be changed to the extended dimension A shown in FIG. 2 and the shortened dimension B shown in FIG. 3. When the hydraulic excavator 1 performs excavation work at a work site, setting the width dimension of the lower travel body 2 to the extended dimension A can enhance the stability of the vehicle body during operation. On the other hand, when transporting the hydraulic excavator 1 to a work site by loading it onto a transport vehicle, setting the width dimension of the lower travel body 2 to the shortened dimension B allows it to fit within the transport width limitions.

As shown in Figures 2 and 3, the center frame 6 constitutes the central part of the lower travel body 2. The center frame 6 is formed as a robust fabricated structure with an H-shape in plan view, for example, by welding multiple steel plates. The center frame 6 is composed of a frame body 6B and multiple (for example, four) mounting legs. On the upper surface side of the frame body 6B, a round body 6A for attaching the swing wheel 3 is fixed. The multiple mounting legs are integrally fixed at the base end to the frame body 6B, with the distal end extending laterally from the frame body 6B. These multiple mounting legs are composed of the left front mounting leg 7 and the left rear mounting leg 8 arranged on the left front side and left rear side of the center frame 6, and the right front mounting leg 9 and the right rear mounting leg 10 arranged on the right front side and right rear side of the center frame 6.

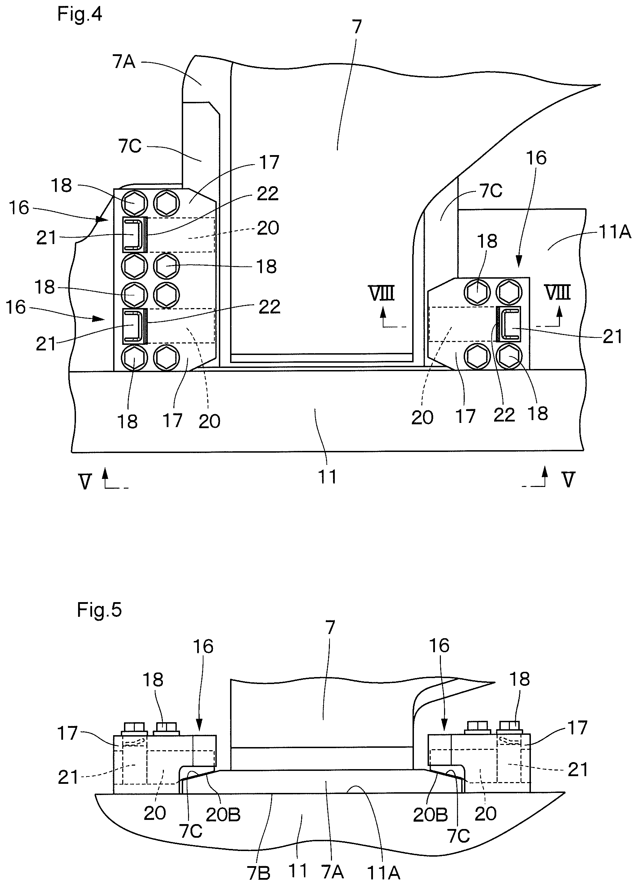

At the distal end side of the left front mounting leg 7, a flange portion 7A for attaching the left side frame 11 is integrally formed. The flange portion 7A is formed in a plate shape extending in the longitudinal direction from the distal end of the left front mounting leg 7. The lower surface 7B of the flange portion 7A is a flat surface and is in contact with the upper surface 11A, which is the surface of the left side frame 11. As shown in Figure 5, flange-side inclined surfaces 7C are integrally formed on both sides in the longitudinal direction of the flange portion 7A. The flange-side inclined surface 7C is inclined obliquely upward from the lower surface 7B with respect to the upper surface 11A of the left side frame 11. Similarly, a flange portion 8A is integrally formed at the distal end side of the left rear mounting leg 8. The lower surface (not shown) of the flange portion 8A is a flat surface, and flange-side inclined surfaces 8B are integrally formed on both sides in the longitudinal direction of the flange portion 8A.

On the other hand, at the distal end side of the right front mounting leg 9, a flange portion 9A for attaching the right side frame 12 is integrally formed. The lower surface (not shown) of the flange portion 9A is a flat surface and is in contact with the upper surface 12A, which is the surface of the right side frame 12. Additionally, flange-side inclined surfaces 9B are integrally formed on both sides in the longitudinal direction of the flange portion 9A. The flange-side inclined surfaces 9B are inclined obliquely upward from the lower surface with respect to the upper surface 12A of the right side frame 12. Similarly, a flange portion 10A is integrally formed at the distal end side of the right rear mounting leg 10. The lower surface (not shown) of the flange portion 10A is a flat surface, and flange-side inclined surfaces 10B are integrally formed on both sides in the longitudinal direction of the flange portion 10A.

The left side frame 11 is attached to the flange portion 7A of the left front mounting leg 7 and the flange portion 8A of the left rear mounting leg 8 using the frame coupling mechanism 16. The right side frame 12 is attached to the flange portion 9A of the right front mounting leg 9 and the flange portion 10A of the right rear mounting leg 10 using the frame coupling mechanism 16. The mounting position of the left side frame 11 relative to the left front mounting leg 7 and the left rear mounting leg 8, as well as the mounting position of the right side frame 12 relative to the right front mounting leg 9 and the right rear mounting leg 10, can be changed by the frame coupling mechanism 16. As a result, the distance between the left side frame 11 and the right side frame 12 can be changed, allowing the width dimension of the lower travel body 2 to be adjusted between the extended dimension A and the shortened dimension B.

Next, the frame coupling mechanism 16 according to this embodiment will be described.

As shown in Figures 2 and 3, multiple (for example, three) frame coupling mechanisms 16 are attached between the flange portion 7A of the left front mounting leg 7 and the left side frame 11, between the flange portion 8A of the left rear mounting leg 8 and the left side frame 11, between the flange portion 9A of the right front mounting leg 9 and the right side frame 12, and between the flange portion 10A of the right rear mounting leg 10 and the right side frame 12.

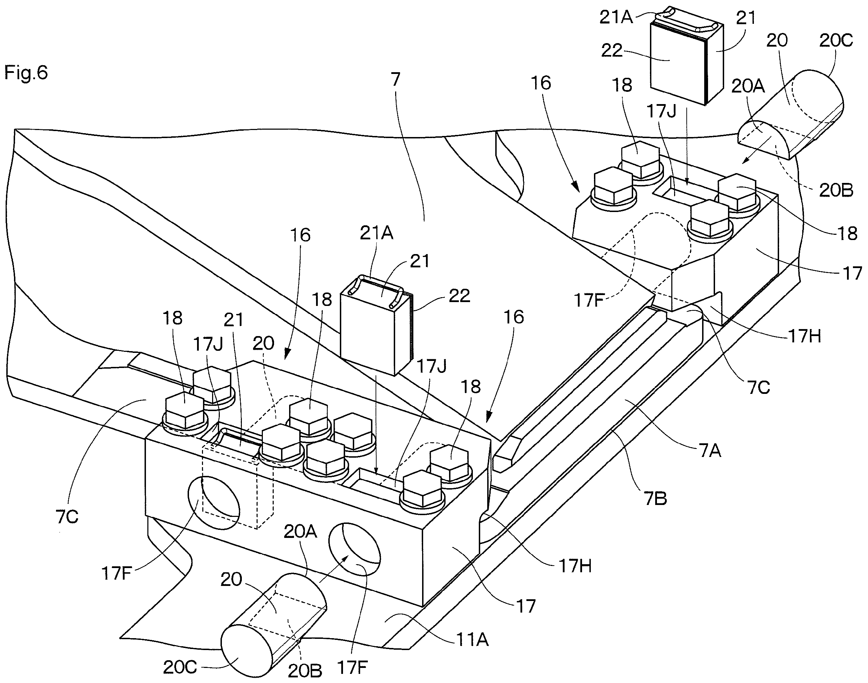

As shown in Figures 4 and 6, multiple (three) frame coupling mechanisms 16 are attached between the flange portion 7A of the left front mounting leg 7 and the left side frame 11. That is, one frame coupling mechanism 16 is arranged at the rear side part of the flange portion 7A, and two frame coupling mechanisms 16, integrated side by side in the lateral direction, are arranged at the front side part of the flange portion 7A. Since these three frame coupling mechanisms 16 have the same configuration, the following describes the frame coupling mechanism 16 arranged at the rear side part of the flange portion 7A of the left front mounting leg 7.

As shown in Figures 6 to 11, the frame coupling mechanism 16 according to this embodiment is composed of a guide member 17, a wedge member 20, a block body 21, and a shim 22.

The guide member 17 is fixed to the upper surface 11A of the left side frame 11 adjacent to the rear side of the flange portion 7A provided on the left front mounting leg 7, and movably supports the wedge member 20 described later. The guide member 17 is formed in a block shape having an upper surface 17A, a lower surface 17B, a front surface 17C, a rear surface 17D, and left and right side surfaces 17E. In the intermediate part in the lateral direction of the guide member 17, a wedge fitting hole 17F is formed, penetrating in the longitudinal direction from the front surface 17C to the rear surface 17D. The wedge fitting hole 17F is formed as a circular hole with a circular cross-section, into which the wedge member 20 is slidably inserted. The guide member 17 has multiple (four) bolt insertion holes 17G formed in the vertical direction from the upper surface 17A to the lower surface 17B on both sides in the lateral direction of the wedge fitting hole 17F. The guide member 17 is fixed to the upper surface 11A of the left side frame 11 by screwing bolts 18 inserted into the bolt insertion holes 17G of the guide member 17.

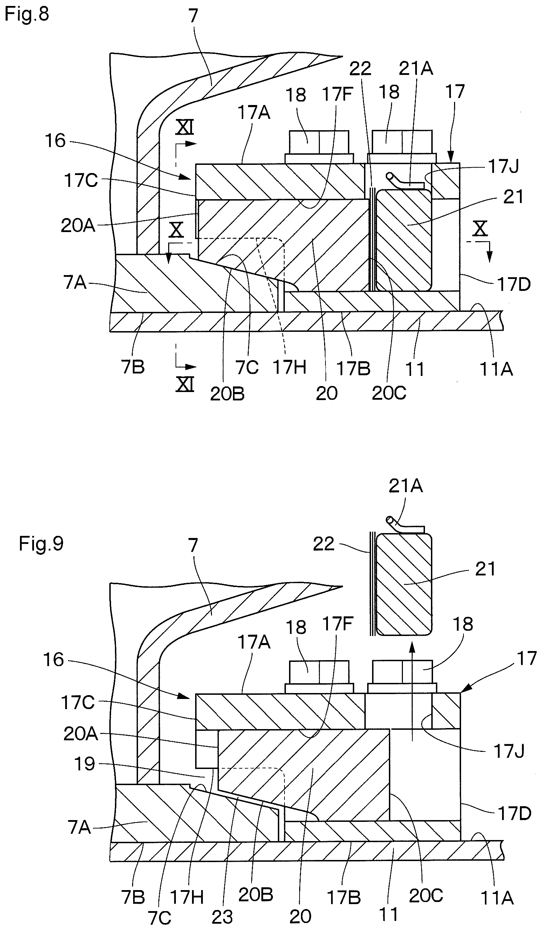

On the front side of the guide member 17, a notch 17H is formed to cut out the lower surface 17B and the left and right side surfaces 17E toward the rear surface 17D from the front surface 17C. As shown in Figure 9, when the guide member 17 is fixed to the left side frame 11 using the bolt 18, the notch 17H of the guide member 17 is positioned above the flange-side inclined surface 7C of the flange portion 7A. As a result, a space 19 extending in the longitudinal direction (front-rear direction) of the left side frame 11 is formed continuously with the wedge fitting hole 17F between the front end side of the guide member 17 and the flange-side inclined surface 7C of the flange portion 7A.

On the rear side of the guide member 17, a square hole 17J extending in the vertical direction from the upper surface 17A to the lower surface 17B is formed. The square hole 17J is formed as a bottomed hole having a width dimension equivalent to the hole diameter of the wedge fitting hole 17F, and it communicates with the wedge fitting hole 17F. Within the corner hole 17J, a block body 21 and a shim 22, which will be described later, are detachably accommodated in the vertical direction.

The wedge member 20 is installed (inserted) within the wedge fitting hole 17F of the guide member 17. The wedge member 20 is formed in a cylindrical shape with a circular cross-section having a diameter equivalent to the hole diameter of the wedge fitting hole 17F, and is slidably inserted into the wedge fitting hole 17F in a state where it can move in the longitudinal direction (front-rear direction) relative to the left side frame 11 and the left front mounting leg 7. At one end side 20A of the movement direction (front-rear direction) of the wedge member 20, a wedge-side inclined surface 20B inclined with respect to the upper surface 11A of the left side frame 11 is formed. The wedge-side inclined surface 20B has an inclination angle equal to the flange-side inclined surface 7C formed on the flange portion 7A and faces the flange-side inclined surface 7C in the moving direction of the wedge member 20. As a result, the wedge-side inclined surface 20B can make surface contact with the flange-side inclined surface 7C of the flange portion 7A. The wedge member 20 is movable between a position where the wedge-side inclined surface 20B is in contact with the flange-side inclined surface 7C of the flange portion 7A (position in Figure 8) and a position where the wedge-side inclined surface 20B is separated from the flange-side inclined surface 7C of the flange portion 7A (position in Figure 9).

In the state where the wedge member 20 is inserted into the wedge fitting hole 17F of the guide member 17, one end 20A of the wedge member 20 is arranged in the space 19 formed between the guide member 17 and the flange-side inclined surface 7C of the flange portion 7A. In this state, one end 20A of the wedge member 20 moves forward (toward the flange portion 7A) along the wedge fitting hole 17F of the guide member 17 within the space 19. Then, as shown in FIG. 8, by inserting one end 20A side of the wedge member 20 between the flange portion 7A and the guide member 17, the wedge member 20 comes into contact with both the guide member 17 (the inner peripheral surface of the wedge fitting hole 17F) and the flange portion 7A (the flange-side inclined surface 7C) without any gap. As a result, the flange portion 7A of the left front mounting leg 7 and the left side frame 11 are connected without any gap via the wedge member 20.

Here, the wedge-side inclined surface 20B has an inclination angle equal to that of the flange-side inclined surface 7C formed on the flange portion 7A and faces the flange-side inclined surface 7C in the moving direction of the wedge member 20. Therefore, by moving the wedge member 20 toward the flange portion 7A, the wedge-side inclined surface 20B can be reliably brought into contact with the flange-side inclined surface 7C. When the wedge member 20 is moved, the change in the gap between the wedge-side inclined surface 20B and the flange-side inclined surface 7C becomes smaller than the amount of movement of the wedge member 20. Therefore, by appropriately setting the inclination angles of the wedge-side inclined surface 20B and the flange-side inclined surface 7C, the gap between the wedge-side inclined surface 20B and the flange-side inclined surface 7C can be finely adjusted. Moreover, the wedge member 20 has a circular cross-sectional shape, and the wedge fitting hole 17F of the guide member 17 is formed as a circular hole into which the wedge member 20 can be slidably inserted. As a result, even if the wedge-side inclined surface 20B is not directly facing the flange-side inclined surface 7C when the wedge member 20 comes into contact with the flange portion 7A, the wedge member 20 can rotate within the wedge fitting hole 17F. This allows the wedge-side inclined surface 20B to follow and make surface contact with the flange-side inclined surface 7C of the flange portion 7A, ensuring contact without any gap.

The block body 21, serving as a stopper member, is installed (inserted) in the square hole 17J of the guide member 17. The block body 21 limits the movement of the wedge member 20 when the wedge member 20 is in contact with both the flange portion 7A of the left front mounting leg 7 and the guide member 17. The block body 21 is formed in a block shape, such as a rectangular parallelepiped, and is detachably mounted in the vertical direction within the square hole 17J of the guide member 17. As shown in FIG. 8, the block body 21 is arranged in the square hole 17J with the wedge member 20 in contact with both the flange portion 7A and the guide member 17, and it contacts the other end 20C of the wedge member 20 in the moving direction to limit its movement. As a result, the wedge member 20 is held in a position where it is in contact with both the flange portion 7A of the left front mounting leg 7 and the guide member 17. A U-shaped bent handle 21A is fixed to the upper surface of the block body 21 using means such as welding, allowing the block body 21 to be easily attached and detached from the square hole 17J of the guide member 17 by gripping the handle 21A.

Shim 22 is installed (inserted) within the corner hole 17J of the guide member 17 along with the block body 21, and is positioned between the other end 20C of the wedge member 20 and the block body 21. The shim 22 has, for example, a square shape equal to that of the block body 21 and is formed by multiple thin plates with different thicknesses. The shim 22 is detachably mounted in the vertical direction within the square hole 17J of the guide member 17, and it adjusts the position of the wedge member 20 relative to the flange portion 7A by varying the number of shims. This allows the wedge member 20 to be brought into contact with both the guide member 17 and the flange portion 7A without any gap.

Additionally, the shim 22 is used to finely adjust the position of the wedge member 20 relative to the flange section 7A, and it is not necessarily an essential component. In other words, when the wedge member 20 makes contact with both the guide member 17 and the flange portion 7A without any gaps, while the block body 21 is positioned within the square hole 17J of the guide member 17, the shim 22 can be omitted. Additionally, the shim 22 can be placed not only between the other end 20C of the wedge member 20 and the block body 21, but also, for example, between the guide member 17 and the block body 21.

The frame coupling mechanism 16, which connects the left front mounting leg 7 of the center frame 6 and the left side frame 11, has the above-described configuration. Similarly, the frame coupling mechanism 16 connecting the left rear mounting leg 8 and the left side frame 11, the frame coupling mechanism 16 connecting the right front mounting leg 9 and the right side frame 12, and the frame coupling mechanism 16 connecting the right rear mounting leg 10 and the right side frame 12 are also configured in the same manner.

Next, the operation of releasing the connection between the left side frame 11 and the left front mounting leg 7 by the frame coupling mechanism 16 to change the width dimension of the lower travel body 2 from the shortened dimension B to the extended dimension A will be described.

When the frame coupling mechanism 16 is in a state of connecting the left front mounting leg 7 and the left side frame 11 of the lower travel body 2, as shown in FIG. 8, the wedge member 20 is in contact with both the guide member 17 (the inner peripheral surface of the wedge fitting hole 17F) and the flange portion 7A (the flange-side inclined surface 7C) without any gap. Then, by contacting the block body 21 and the shim 22 arranged in the corner hole 17J of the guide member 17 with the other end 20C of the wedge member 20, the movement of the wedge member 20 is limitted.

To release this connected state, as shown in FIG. 9, it is necessary to grip the handle 21A of the block body 21 arranged in the square hole 17J of the guide member 17 and pull the block body 21 upward from the guide member 17. In addition, the shim 22, which is arranged together with the block body 21 in the square hole 17J, also needs to be pulled out upward from the guide member 17. As a result, the movement limition on the wedge member 20 is released, allowing the wedge member 20 to move within the wedge fitting hole 17F of the guide member 17. Then, in the space 19 formed between the flange portion 7A and the notch 17H of the guide member 17, a gap 23 is formed between the wedge-side inclined surface 20B of the wedge member 20 and the flange-side inclined surface 7C of the flange portion 7A.

In this way, by simply removing the block body 21 from the guide member 17, a gap 23 can be formed between the wedge-side inclined surface 20B of the wedge member 20 and the flange-side inclined surface 7C of the flange portion 7A. As a result, the connection state between the left front mounting leg 7 and the left side frame 11 can be easily released. Similarly, by releasing the connection between the left rear mounting leg 8 and the left side frame 11, the left side frame 11 becomes movable in the left-right direction. On the other hand, by releasing the connection between the right front mounting leg 9 and the right side frame 12 and the right rear mounting leg 10 and the right side frame 12, the right side frame 12 becomes movable in the left-right direction. In this state, for example, the span cylinder (not shown) installed between the center frame 6 and the left side frame 11, and between the center frame 6 and the right side frame 12 is extended. As a result, the width dimension of the lower travel body 2 can be changed from the shortened dimension B suitable for loading the hydraulic excavator 1 onto a transport vehicle to the extended dimension A suitable for performing excavation work or the like using the hydraulic excavator.

After changing the width dimension of the lower travel body 2 to the extended dimension A, the left side frame 11 is connected to the flange portion 7A of the left front mounting leg 7 using the frame coupling mechanism 16. Specifically, for example, a rod-shaped jig (not shown) is inserted into the wedge fitting hole 17F from the rear surface 17D side of the guide member 17, and the other end 20C of the wedge member 20 is pressed toward the flange portion 7A. As a result, the gap 23 formed between the wedge-side inclined surface 20B of the wedge member 20 and the flange-side inclined surface 7C of the flange portion 7A is eliminated, and the wedge-side inclined surface 20B comes into contact with the flange-side inclined surface 7C.

In this state, by inserting the block body 21 into the square hole 17J of the guide member 17 and abutting the block body 21 against the other end 20C of the wedge member 20, the movement of the wedge member 20 is limited. As a result, the wedge member 20 is held in a position where it abuts the flange portion 7A of the left front mounting leg 7 and the guide member 17. If there is a gap between the other end 20C of the wedge member 20 and the block body 21, the position of the wedge member 20 relative to the flange portion 7A is finely adjusted by inserting a shim 22 between them. Thus, as shown in FIG. 8, by inserting the wedge member 20 between the guide member 17 (inner peripheral surface of the wedge fitting hole 17F) and the flange portion 7A (flange side inclined surface 7C), it can be abutted without gaps, and the left front mounting leg 7 and the left side frame 11 can be connected without gaps using the wedge member 20.

Similarly, the left rear mounting leg 8 and the left side frame 11, as well as the right front mounting leg 9/right rear mounting leg 10 and the right side frame 12, can be connected without gaps using the frame coupling mechanism 16. In this way, with the width dimension of the lower travel body 2 changed to the extended dimension A, the left front mounting leg 7/left rear mounting leg 8 and the left side frame 11, as well as the right front mounting leg 9/right rear mounting leg 10 and the right side frame 12, can be connected without gaps using the frame coupling mechanism 16. As a result, backlash due to gaps in the connection part between the left front mounting leg 7 and the left side frame 11 is suppressed, and vibration occurring during excavation work with the hydraulic excavator 1 using the work device 5 is prevented, thereby enhancing the workability of the excavation work.

Moreover, the frame coupling mechanism 16 includes a guide member 17 attached to the left side frame 11 and a wedge member 20 that moves along the guide member 17. By inserting this wedge member 20 between the guide member 17 and the flange portion 7A and abutting them, the left front mounting leg 7 and the left side frame 11 can be connected. Therefore, compared to a configuration where the flange portion of the left front mounting leg and the left side frame are connected using multiple bolts, the workability when connecting the flange portion 7A of the left front mounting leg 7 and the left side frame 11, and when releasing the connection state, can be enhanced.

Furthermore, since the wedge member 20 of the frame coupling mechanism 16 moves in the longitudinal direction (front-rear direction) of the left side frame 11, the guide member 17 that movably supports the wedge member 20 does not protrude in the lateral direction from the left side frame 11. This allows the frame coupling mechanism 16 to be compactly arranged between the upper surface 11A of the left side frame 11 and the crawler 15, contributing to space-saving.

Thus, in the embodiment, the frame coupling mechanism 16 that connects the left side frame 11 to the left front mounting leg 7 is attached to the left side frame 11. The frame coupling mechanism 16 includes a guide member 17 that forms a space 19 between the flange portion 7A of the left front mounting leg 7, a wedge member 20 that abuts the flange portion 7A by moving along the guide member 17 within the space 19 installed between the flange portion 7A and the guide member 17, and a block body 21 installed on the guide member 17 that limits the movement of the wedge member 20 at a position where the wedge member 20 abuts the flange portion 7A and the guide member 17.

According to this configuration, by inserting the wedge member 20 between the guide member 17 and the flange portion 7A and abutting them, the left front mounting leg 7 and the left side frame 11 can be connected without gaps. As a result, backlash due to gaps in the connection part between the left front mounting leg 7 and the left side frame 11 can be suppressed, preventing vibration occurring during excavation work with the hydraulic excavator 1 using the work device 5, thereby enhancing the workability of the excavation work.

In the embodiment, the flange portion 7A is formed with an inclined flange side inclined surface 7C relative to the upper surface 11A of the left side frame 11. Additionally, the wedge member 20 is formed with a wedge side inclined surface 20B that can make surface contact with the flange side inclined surface 7C, facing the flange side inclined surface 7C in the movement direction of the wedge member 20. According to this configuration, by moving the wedge member 20 toward the flange portion 7A side, the wedge side inclined surface 20B can be reliably abutted against the flange side inclined surface 7C. Moreover, by the wedge side inclined surface 20B making surface contact with the flange side inclined surface 7C, the connection strength between the left front mounting leg 7 and the left side frame 11 connected using the frame coupling mechanism 16 can be enhanced.

In the embodiment, the wedge member 20 is formed in a cylindrical shape with a circular cross-section, and the guide member 17 is formed with a wedge fitting hole 17F (circular hole) into which the wedge member 20 is slidably inserted. According to this configuration, even if the wedge side inclined surface 20B is not directly facing the flange side inclined surface 7C when the wedge member 20 abuts the flange portion 7A, the wedge member 20 can rotate within the wedge fitting hole 17F. This ensures that the wedge side inclined surface 20B can reliably follow and make surface contact with the flange side inclined surface 7C of the flange portion 7A.

In the embodiment, one end 20A of the wedge member 20 in the movement direction, in this embodiment, the wedge side inclined surface 20B abuts the flange side inclined surface 7C of the flange portion 7A. The stopper member is detachably installed between the other end 20C of the wedge member 20 in the movement direction and the guide member 17, and is constituted by a block body 21 that abuts the other end 20C of the wedge member 20 when one end 20A of the wedge member 20 abuts the flange portion 7A of the left front mounting leg 7. According to this configuration, by simply arranging the block body 21 between the other end 20C of the wedge member 20 and the guide member 17, the movement of the wedge member 20 can be limited at a position where it abuts the flange portion 7A and the guide member 17, simplifying the configuration of the frame coupling mechanism 16.

In the embodiment, a shim 22 is arranged between the other end 20C of the wedge member 20 and the block body 21, or between the guide member 17 and the block body 21. According to this configuration, the position of the wedge member 20 relative to the flange portion 7A can be finely adjusted according to the number of shims 22, ensuring that the wedge member 20 reliably abuts both the guide member 17 and the flange portion 7A.

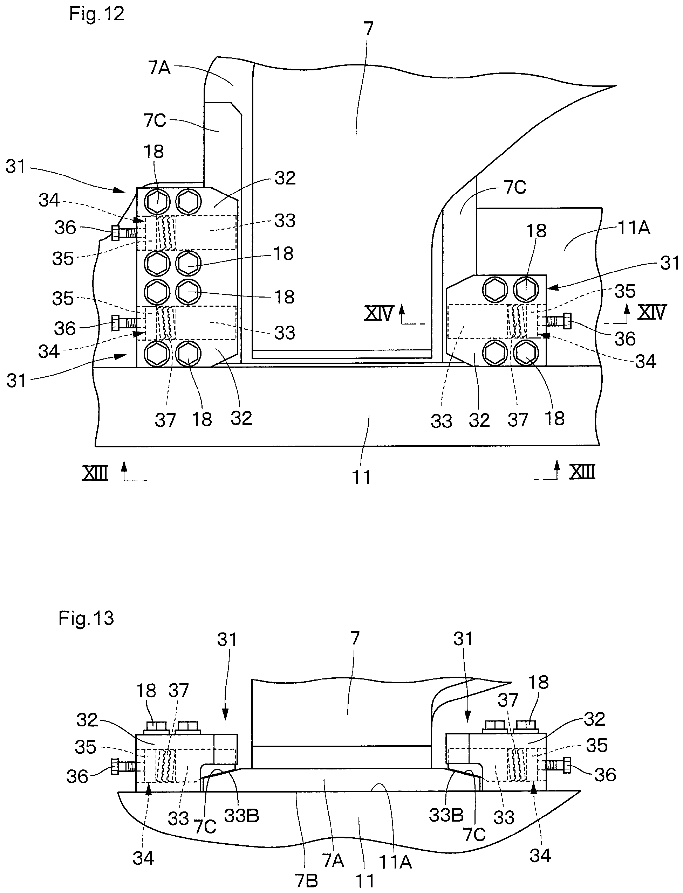

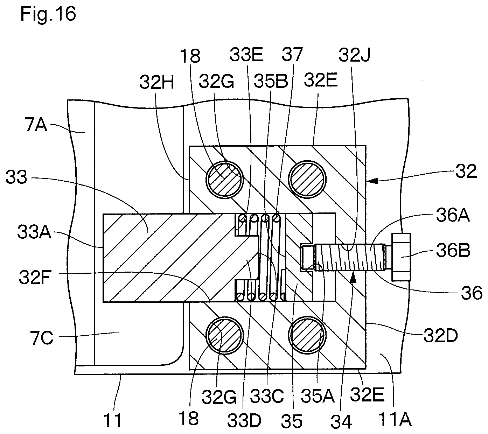

Next, FIGS. 12 to 16 illustrate a second embodiment of the present invention. The feature of this embodiment is that the stopper member constituting the frame coupling mechanism includes a stopper body that is movably provided in the same direction as the wedge member, and a pressing member that presses the stopper body toward the wedge member. In the second embodiment, the same reference numerals are assigned to the same components as those in the first embodiment described above, and their description is omitted.

The frame coupling mechanism 31 according to this embodiment is provided (attached) with multiple (three) between the flange portion 7A of the left front mounting leg 7 and the left side frame 11. That is, one frame coupling mechanism 31 is arranged at the rear side part of the flange portion 7A, and two frame coupling mechanisms 31 integrated side by side in the lateral direction are arranged at the front side part of the flange portion 7A.

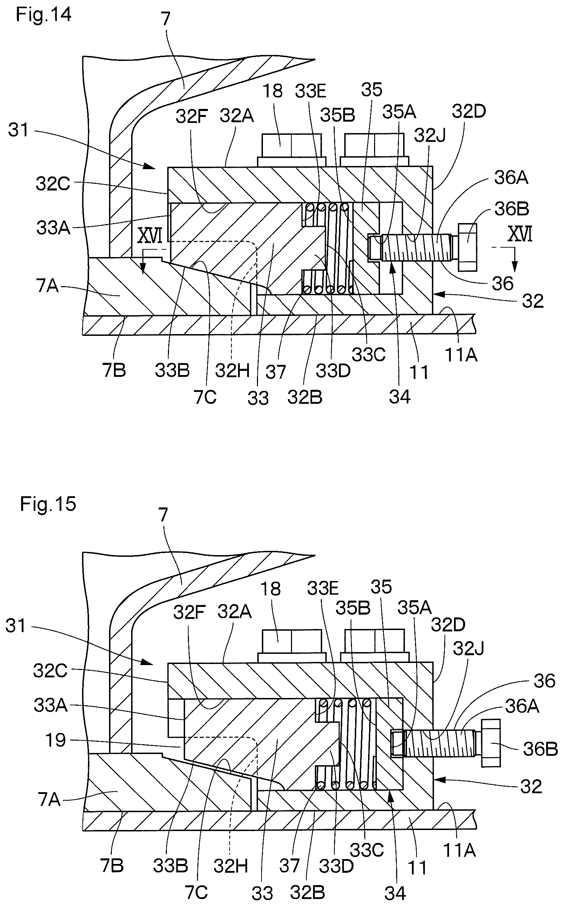

As shown in FIGS. 14 to 16, the frame coupling mechanism 31 according to this embodiment is configured to include a guide member 32, a wedge member 33, and a stopper member 34. However, the stopper member 34 is constituted by a stopper body 35 and a pressing bolt 36, which differs from the frame coupling mechanism 16 according to the first embodiment.

The guide member 32 is fixed to the upper surface 11A of the left side frame 11 adjacent to the rear side of the flange portion 7A formed on the left front mounting leg 7, and movably supports the wedge member 33 described later. The guide member 32 is formed in a block shape having an upper surface 32A, a lower surface 32B, a front surface 32C, a rear surface 32D, and left and right side surfaces 32E. In the middle part in the lateral direction of the guide member 32, a bottomed wedge fitting hole 32F extending from the front surface 32C to the rear surface 32D is formed. Additionally, the wedge fitting hole 32F is a circular hole with a circular cross-section. The guide member 32 is formed with multiple (four) bolt insertion holes 32G that penetrate vertically from the upper surface 32A to the lower surface 32B on both sides in the lateral direction sandwiching the wedge fitting hole 32F. The guide member 32 is fixed to the upper surface 11A of the left side frame 11 by screwing bolts 18 inserted through the bolt insertion holes 32G into the left side frame 11.

On the front side of the guide member 32, a notch 32H is formed, cutting out the bottom surface 32B and the left and right side surfaces 32E from the front surface 32C to the rear surface 32D. As shown in Figure 15, when the guide member 32 is fixed to the left side frame 11 using the bolt 18, the notch 32H of the guide member 32 is positioned above the flange-side inclined surface 7C of the flange portion 7A. Thus, a space 19 is formed between the front end side of the guide member 32 and the flange-side inclined surface 7C of the flange portion 7A, extending continuously in the longitudinal direction (front-rear direction) of the left side frame 11 along the wedge fitting hole 32F. On the rear surface 32D of the guide member 32, a bolt hole (female threaded hole) 32J is formed, penetrating from the outside of the guide member 32 into the wedge fitting hole 32F. The bolt hole 32J is arranged concentrically with the wedge fitting hole 32F, and the pressing bolt 36, described later, is screwed into it.

The wedge member 33 is installed within the wedge fitting hole 32F of the guide member 32. The wedge member 33 is formed in a cylindrical shape with a circular cross-section having a diameter equivalent to the hole diameter of the wedge fitting hole 32F, and is slidably inserted within the wedge fitting hole 32F in a state that allows movement relative to the left side frame 11 and the left front mounting leg 7. On the side of one end 33A of the wedge member 33 in the moving direction (front-rear direction), a wedge-side inclined surface 33B is formed, inclined relative to the upper surface 11A of the left side frame 11. The wedge-side inclined surface 33B has an inclination angle equal to the flange-side inclined surface 7C formed on the flange portion 7A and faces the flange-side inclined surface 7C in the moving direction of the wedge member 33.

When the wedge member 33 is inserted into the wedge fitting hole 32F of the guide member 32, one end 33A of the wedge member 33 is positioned within the space 19 formed between the guide member 32 and the flange-side inclined surface 7C of the flange portion 7A. On the other end 33C of the wedge member 33, a cylindrical protrusion 33D with a smaller diameter than the wedge member 33 is protrusively installed concentrically with the wedge member 33. The annular end surface centered on the cylindrical protrusion 33D of the other end 33C of the wedge member 33 serves as the spring receiving surface 33E.

The stopper member 34 is installed on the guide member 32 and limits the movement of the wedge member 33 when the wedge member 33 is in contact with the flange portion 7A and the guide member 32. As shown in FIGS. 14 to 16, the stopper member 34 is composed of a stopper body 35 and a pressing bolt 36.

The stopper body 35 is installed within the wedge fitting hole 32F of the guide member 32 and is movable in the same direction as the wedge member 33. The stopper body 35 is formed, for example, by a thick disc with an outer diameter equal to the wedge member 33, and is slidably arranged along the wedge fitting hole 32F between the rear surface 32D of the guide member 32 and the other end 33C of the wedge member 33. On the end surface of the stopper body 35 positioned on the rear surface 32D side of the guide member 32, a recessed part 35A is formed. The recessed part 35A is formed as a bottomed hole positioned at the center of the stopper body 35, where the tip of the pressing bolt 36 contacts. On the other hand, the end surface of the stopper body 35 positioned on the wedge member 33 side serves as the spring receiving surface 35B.

The pressing bolt 36, as a pressing member, is attached to the rear surface 32D of the guide member 32. The pressing bolt 36 has a threaded part 36A that screws into the bolt hole 32J of the guide member 32 and a head part 36B positioned outside the guide member 32. By screwing the threaded part 36A of the pressing bolt 36 into the bolt hole 32J of the guide member 32, the tip of the threaded part 36A contacts the recessed part 35A of the stopper body 35. In this state, by rotating the pressing bolt 36 in the tightening direction (e.g., clockwise), the stopper body 35 is pressed, and the stopper body 35 approaches the wedge member 33 along the wedge fitting hole 32F of the guide member 32.

The compression spring 37, as a biasing member, is attached within the wedge fitting hole 32F of the guide member 32 and is positioned between the wedge member 33 and the stopper body 35. One end of the compression spring 37 contacts the spring receiving surface 33E of the wedge member 33, and the other end of the compression spring 37 contacts the spring receiving surface 35B of the stopper body 35. By rotating the pressing bolt 36, screwed into the bolt hole 32J of the guide member 32, in the tightening direction, the stopper body 35 moves toward the wedge member 33. At this time, the compression spring 37 contracts between the stopper body 35 and the wedge member 33, imparting spring force to the wedge member 33. Thus, the wedge-side inclined surface 33B of the wedge member 33 can be pressed against the flange-side inclined surface 7C of the flange portion 7A with appropriate pressing force (spring force), allowing the wedge-side inclined surface 33B to contact the flange-side inclined surface 7C (see FIG. 14). The stopper body 35 and the pressing bolt 36 limit the movement of the wedge member 33 via the compression spring 37, and the wedge member 33 is held in a position contacting the flange portion 7A and the guide member 32.

On the other hand, as shown in FIG. 15, when the stopper body 35 is in contact with the rear surface 32D side of the guide member 32, the compression spring 37 returns to its natural length, and no spring force is imparted to the wedge member 33. Thus, the wedge-side inclined surface 33B of the wedge member 33 can be detached from the flange-side inclined surface 7C of the flange portion 7A.

It should be noted that the compression spring 37 presses the wedge-side inclined surface 33B of the wedge member 33 against the flange-side inclined surface 7C of the flange portion 7A with appropriate pressing force, but it is not necessarily an essential component. That is, for example, the tightening amount of the pressing bolt 36 is adjusted while the stopper body 35 is directly in contact with the wedge member 33 by the long pressing bolt 36. This allows the wedge-side inclined surface 33B of the wedge member 33 to be in contact with the flange-side inclined surface 7C of the flange portion 7A without any gaps.

The frame coupling mechanism 31 according to the second embodiment has the configuration as described above. Next, to change the width dimension of the lower travel body 2 from the shortened dimension B to the extended dimension A, the process of releasing the connection between the left side frame 11 and the left front mounting leg 7 by the frame coupling mechanism 31 will be described.

When the frame coupling mechanism 31 is in a state of connecting the flange portion 7A of the left front mounting leg 7 and the left side frame 11, as shown in FIG. 14, the stopper body 35 arranged within the wedge fitting hole 32F of the guide member 32 is pressed toward the wedge member 33 by the pressing bolt 36. At this time, the compression spring 37 positioned between the wedge member 33 and the stopper body 35 imparts spring force to the wedge member 33. Thus, the wedge member 33 is held in a position where the wedge-side inclined surface 33B contacts the flange-side inclined surface 7C of the flange portion 7A.

To release this connection state, rotate the pressing bolt 36 in the loosening direction (e.g., counterclockwise). Thus, as shown in FIG. 15, the stopper body 35 contacts the rear surface 32D of the guide member 32, and the compression spring 37 extends to its natural length. Thus, the wedge-side inclined surface 33B of the wedge member 33 can be detached from the flange-side inclined surface 7C of the flange portion 7A.

In this way, by detaching the wedge-side inclined surface 33B of the wedge member 33 from the flange-side inclined surface 7C of the flange portion 7A, the connection state between the left front mounting leg 7 and the left side frame 11 is released. Similarly, by releasing the connection state between the left rear mounting leg 8 and the left side frame 11 using the frame coupling mechanism 31, the left side frame 11 becomes movable in the left-right direction. Thus, the width dimension of the lower travel body 2 can be changed from the shortened dimension B to the extended dimension A.

After changing the width dimension of the lower travel body 2 to the extended dimension A, connect the left side frame 11 to the flange portion 7A of the left front mounting leg 7 using the frame coupling mechanism 31. Specifically, rotate the pressing bolt 36 in the tightening direction to bring the stopper body 35 closer to the wedge member 33. At this time, the compression spring 37 imparts spring force to the wedge member 33. Thus, the wedge-side inclined surface 33B of the wedge member 33 contacts the flange-side inclined surface 7C with appropriate pressing force (spring force) within the space 19 formed between the guide member 32 and the flange portion 7A. Then, the stopper body 35 and the pressing bolt 36 limit the movement of the wedge member 33 via the compression spring 37. As a result, the wedge member 33 can be inserted between the guide member 32 (inner peripheral surface of the wedge fitting hole 32F) and the flange portion 7A (flange-side inclined surface 7C) to contact both, allowing the left front mounting leg 7 and the left side frame 11 to be connected without gaps using the wedge member 33.

Similarly, the left rear mounting leg 8 and the left side frame 11 are connected using the frame coupling mechanism 31. Thus, the width dimension of the lower travel body 2 can be changed to the extended dimension A, and the left front mounting leg 7 and left rear mounting leg 8 can be seamlessly connected to the left side frame 11 using the frame coupling mechanism 31.

In the second embodiment, the stopper member 34 of the frame coupling mechanism 31 is configured to include a stopper body 35, which is movably installed in the same direction as the wedge member 33, and a pressing bolt 36 (pressing member) that presses the stopper body 35 toward the wedge member 33. According to this configuration, by tightening the pressing bolt 36 into the bolt hole 32J of the guide member 32, the wedge member 33 is pressed against the flange portion 7A of the left front mounting leg 7 via the stopper body 35. Then, the movement of the wedge member 33 can be limited at the position where the wedge side inclined surface 33B contacts the flange side inclined surface 7C of the flange portion 7A. As a result, the wedge member 33 can be inserted between the guide member 32 and the flange portion 7A to make contact with both, allowing seamless connection between the left front mounting leg 7 and the left side frame 11 using the wedge member 33.

Moreover, in the second embodiment, a compression spring 37 (biasing member) is installed between the wedge member 33 and the stopper body 35 to bias the wedge member 33 in the direction of contact with the flange portion 7A. According to this configuration, the compression spring 37 applies spring force to the wedge member 33, allowing the wedge side inclined surface 33B of the wedge member 33 to be pressed against the flange side inclined surface 7C of the flange portion 7A with appropriate pressing force (spring force). As a result, the wedge side inclined surface 33B can always be in contact with the flange side inclined surface 7C, allowing seamless connection between the left front mounting leg 7 and the left side frame 11.

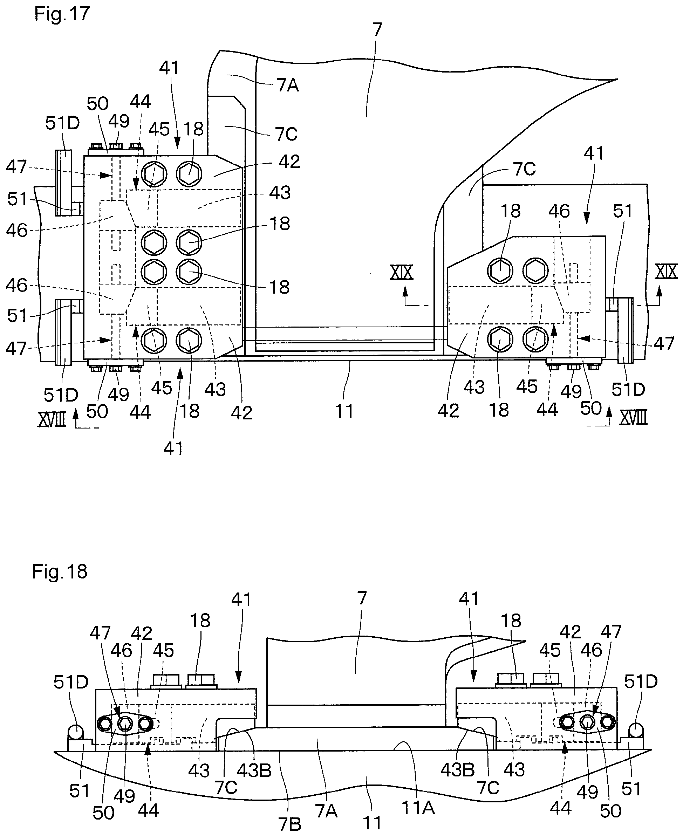

Next, Figures 17 to 22 show the third embodiment of the present invention. The feature of this embodiment is that the stopper member, which constitutes the frame coupling mechanism, includes a stopper body that is installed to be movable in the same direction as the wedge member, a pressing member that is installed to be movable in a direction intersecting the movement direction of the wedge member and presses the stopper body towards the wedge member by contacting the stopper member, and a moving mechanism that moves the pressing member. In the third embodiment, the same reference numerals are assigned to the same components as those in the first embodiment described above, and their description is omitted.

The frame coupling mechanism 41 according to this embodiment is attached between the flange portion 7A of the left front mounting leg 7 and the left side frame 11 in multiple (three) locations. That is, one frame coupling mechanism 41 is arranged at the rear side part of the flange portion 7A, and two frame coupling mechanisms 41, integrated side by side in the left-right direction, are arranged at the front side part of the flange portion 7A.

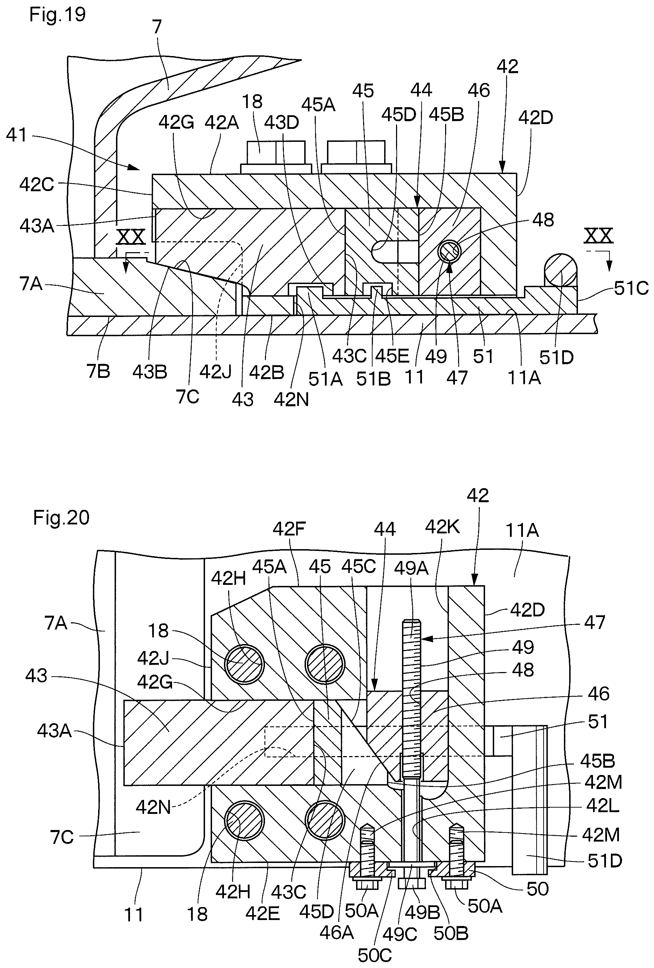

As shown in Figures 19 to 22, the frame coupling mechanism 41 according to this embodiment is configured to include a guide member 42, a wedge member 43, and a stopper member 44. However, the stopper member 44 is different from the frame coupling mechanism 16 according to the first embodiment in that it is constituted by a stopper body 45, a pressing tool 46, and a pressing tool moving mechanism 47.

The guide member 42 is fixed to the upper surface 11A of the left side frame 11 adjacent to the rear side of the flange portion 7A attached on the left front mounting leg 7, and movably supports the wedge member 43 described later. The guide member 42 is formed in a block shape having an upper surface 42A, a lower surface 42B, a front surface 42C, a rear surface 42D, a left side surface 42E, and a right side surface 42F. In the middle part in the left-right direction of the guide member 42, a bottomed wedge fitting hole 42G extending from the front surface 42C to the rear surface 42D is formed, and the wedge fitting hole 42G is a circular hole with a circular cross-sectional shape. The guide member 42 has multiple (four) bolt insertion holes 42H formed on both sides in the left-right direction, penetrating vertically from the upper surface 42A to the lower surface 42B, sandwiching the wedge fitting hole 42G. The guide member 42 is fixed to the upper surface 11A of the left side frame 11 by screwing the bolt 18, which is inserted through the bolt insertion hole 42H, into the left side frame 11.

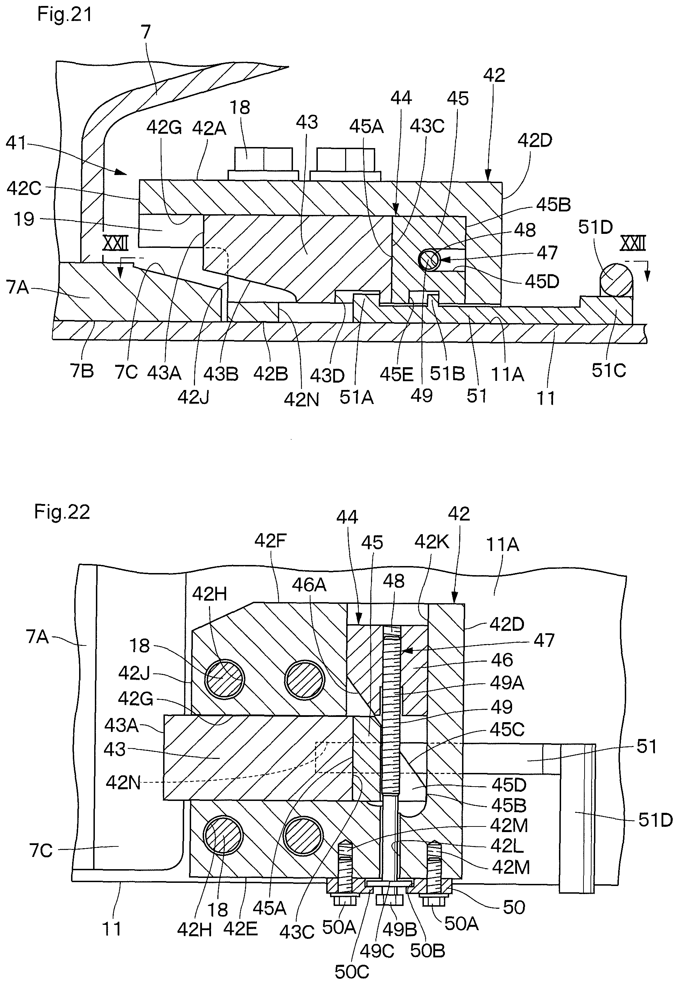

On the front side of the guide member 42, a notch 42J is formed, cutting out the lower surface 42B, left side surface 42E, and right side surface 42F from the front surface 42C to the rear surface 42D. As shown in Figure 21, when the guide member 42 is fixed to the left side frame 11 using bolts 18, the notch 42J of the guide member 42 is positioned above the flange side inclined surface 7C of the flange portion 7A. Thus, a space 19 is formed between the front end side of the guide member 42 and the flange side inclined surface 7C of the flange portion 7A, extending in the longitudinal direction (front-rear direction) of the left side frame 11 continuously with the wedge fitting hole 42G.

On the right side surface 42F of the guide member 42, a pressing tool fitting hole 42K extending horizontally toward the left side surface 42E is formed. The pressing tool fitting hole 42K is a bottomed square hole with a square cross-sectional shape extending in the left-right direction, communicating with the wedge fitting hole 42G in an orthogonal state. In the pressing tool fitting hole 42K, a pressing tool 46, described later, is slidably inserted. On the left side surface 42E of the guide member 42, a bolt insertion hole 42L extending from the outside of the guide member 42 toward the right side surface 42F is formed. The bolt insertion hole 42L penetrates into the pressing tool fitting hole 42K, and an operation bolt 49, described later, is inserted. Additionally, two bolt holes (female threaded holes) 42M, sandwiching the bolt insertion hole 42L from the longitudinal direction, are formed on the left side surface 42E of the guide member 42.

On the lower surface 42B of the guide member 42, a return member mounting groove 42N is formed. The return member mounting groove 42N is positioned below (directly below) the center of the wedge fitting hole 42G and extends in the front-rear direction from the rear surface 42D to the front surface 42C of the guide member 42. The return member mounting groove 42N is formed as a linear groove with a smaller groove width than the hole diameter of the wedge fitting hole 42G, communicating with the lower end side of the wedge fitting hole 42G and the pressing tool fitting hole 42K. In the return member mounting groove 42N, a return member 51, described later, is arranged to be movable in the front-rear direction.

The wedge member 43 is installed in the wedge fitting hole 42G of the guide member 42. The wedge member 43 is formed in a cylindrical shape with a circular cross-section having a diameter equivalent to the hole diameter of the wedge fitting hole 42G, and is slidably inserted into the wedge fitting hole 42G in a state movable relative to the left side frame 11 and the left front mounting leg 7. On one end 43A side of the movement direction of the wedge member 43, a wedge side inclined surface 43B inclined relative to the upper surface 11A of the left side frame 11 is formed. The wedge side inclined surface 43B has an inclination angle equal to the flange side inclined surface 7C formed on the flange portion 7A, and faces the flange side inclined surface 7C in the movement direction of the wedge member 43.

When the wedge member 43 is inserted into the wedge fitting hole 42G of the guide member 42, one end 43A of the wedge member 43 is positioned within the space 19 formed between the guide member 42 and the flange side inclined surface 7C of the flange portion 7A. On the outer peripheral surface of the other end 43C side of the wedge member 43, a recessed part 43D is formed, recessed toward the center. The recessed part 43D opens into the return member mounting groove 42N of the guide member 42, engaging with the tip ection 51A of the return member 51 described later.

The stopper member 44 is provided (installed) on the guide member 42, limiting the movement of the wedge member 43 when it is in contact with the flange portion 7A and the guide member 42. As shown in Figures 19 to 22, the stopper member 44 is configured to include a stopper body 45, a pressing tool 46, and a pressing tool moving mechanism 47.

The stopper body 45 is installed in the wedge fitting hole 42G of the guide member 42, and is movable in the same direction as the wedge member 43. The stopper body 45 is formed by a cylinder having an outer diameter dimension equal to the wedge member 43, for example, and one end 45A in the movement direction of the stopper body 45 is directly facing the other end 43C of the wedge member 43. On the other end 45B of the stopper body 45, a stopper side inclined surface 45C is formed, and it is arranged within the pressing tool fitting hole 42K of the guide member 42. The stopper side inclined surface 45C is inclined such that the axial dimension of the stopper body 45 gradually decreases from the left side surface 42E to the right side surface 42F of the guide member 42.

A groove 45D is formed in the central part of the stopper body 45 in the vertical direction by cutting out the stopper body 45 horizontally from the other end 45B to the one end 45A side. The groove 45D opens at the other end 45B of the stopper body 45 and accommodates the operation bolt 49 described later. A recessed part 45E is formed on the outer peripheral surface of the stopper body 45, recessed toward the center. The recessed part 45E opens into the return member mounting groove 42N of the guide member 42, engaging with the intermediate protrusion 51B of the return member 51.

The pressing tool 46 is installed within the pressing tool fitting hole 42K of the guide member 42 and is movable in a direction perpendicular to the movement direction of the wedge member 43 (left-right direction). The pressing tool 46 consists of a square columnar block body with a cross-sectional shape similar to the pressing tool fitting hole 42K, moving along the pressing tool fitting hole 42K. On the surface of the pressing tool 46 on the front side 42C of the guide member 42, a pressing side inclined surface 46A is formed. The pressing side inclined surface 46A has the same inclination angle as the stopper side inclined surface 45C of the stopper body 45 and faces the stopper side inclined surface 45C in the movement direction of the pressing tool 46.

The pressing tool moving mechanism 47 is installed on the guide member 42 and the pressing tool 46, moving the pressing tool 46 relative to the guide member 42. The pressing tool moving mechanism 47 is composed of a bolt hole (female threaded hole) 48 formed in the pressing tool 46 and an operation bolt 49 rotatably supported by the guide member 42 and screwed into the bolt hole 48.

The bolt hole 48 constituting the pressing tool moving mechanism 47 is formed in the pressing tool 46. The bolt hole 48 is concentrically arranged with the bolt insertion hole 42L formed in the guide member 42 and penetrates in the movement direction (left-right direction) of the pressing tool 46. The threaded part 49A of the operation bolt 49 is screwed into the bolt hole 48.

The operation bolt 49, which constitutes the pressing tool moving mechanism 47 along with the bolt hole 48, is inserted into the bolt insertion hole 42L of the guide member 42 and protrudes into the pressing tool fitting hole 42K. The operation bolt 49 has a threaded part 49A that screws into the bolt hole 48 of the pressing tool 46 within the pressing tool fitting hole 42K, and a head part 49B located outside the guide member 42. Near the head part 49B, a disc-shaped guard part 49C is integrally fixed, and the guard part 49C is rotatably supported by the bolt support member 50.

The bolt support member 50 is arranged on the left side surface 42E of the guide member 42. As shown in Figures 18 and 20, the bolt support member 50 is attached to the left side surface 42E of the guide member 42 by two bolts 50A screwed into the bolt hole 42M of the guide member 42. In the central part of the bolt support member 50, a cover part 50C is formed to sandwich the guard part 49C of the operation bolt 49 between the flange fitting hole 50B, where the guard part 49C is rotatably fitted, and the left side surface 42E of the guide member 42.

The operation bolt 49 protrudes into the pressing tool fitting hole 42K by being inserted into the bolt insertion hole 42L of the guide member 42. The threaded part 49A of the operation bolt 49 screws into the bolt hole 48 of the pressing tool 46 within the pressing tool fitting hole 42K, and the head part 49B and guard part 49C of the operation bolt 49 are located outside the guide member 42 (left side surface 42E). In this state, the bolt support member 50 is fixed to the left side surface 42E of the guide member 42 by two bolts 50A screwed into the bolt hole 42M of the guide member 42. Thus, the guard part 49C of the operation bolt 49 is rotatably fitted into the guard part fitting hole 50B of the bolt support member 50 and is axially positioned by the cover part 50C and the left side surface 42E of the guide member 42. In this way, the operation bolt 49 is rotatably supported by the guide member 42 with the threaded part 49A screwed into the bolt hole 48 of the pressing tool 46.

Therefore, by rotating the head part 49B of the operation bolt 49 in the tightening direction (e.g., clockwise), the pressing tool 46 moves along the pressing tool fitting hole 42K of the guide member 42 to the left side surface 42E side. The pressing side inclined surface 46A of the moving pressing tool 46 contacts the stopper side inclined surface 45C of the stopper body 45, causing the pressing tool 46 to be inserted between the stopper side inclined surface 45C of the stopper body 45 and the inner peripheral surface of the pressing tool fitting hole 42K. The stopper body 45 is pressed by the pressing side inclined surface 46A of the pressing tool 46, moving along the wedge fitting hole 42G of the guide member 42 to the wedge member 43 side. As a result, the wedge member 43 is pressed by the stopper body 45 and moves to the flange portion 7A side of the left front mounting leg 7, allowing the wedge side inclined surface 43B of the wedge member 43 to contact the flange side inclined surface 7C within the space 19 formed between the guide member 42 and the flange portion 7A (see Figure 19).

On the other hand, by rotating the head part 49B of the operation bolt 49 in the loosening direction (e.g., counterclockwise), the pressing tool 46 moves along the pressing tool fitting hole 42K of the guide member 42 to the right side surface 42F side. As a result, the pressing side inclined surface 46A of the pressing tool 46 detaches from the stopper side inclined surface 45C of the stopper body 45. When moving the pressing tool 46 and the stopper body 45 according to the rotation of the operation bolt 49, the threaded part 49A of the operation bolt 49 is accommodated within the groove 45D of the stopper body 45.

The return member 51 is installed to be movable in the longitudinal direction between the upper surface 11A of the left side frame 11 and the guide member 42. The return member 51 moves the wedge member 43, which is in contact with the flange portion 7A (flange side inclined surface 7C), in a direction away from the flange portion 7A. The return member 51 is formed using an elongated flat plate extending in the longitudinal direction, and is movable along the return member mounting groove 42N formed in the guide member 42. At one end of the return member 51 arranged within the return member mounting groove 42N, a tip protrusion 51A protruding upward is formed, which engages with the recessed part 43D of the wedge member 43. Additionally, on one end side of the return member 51, an intermediate protrusion 51B is formed adjacent to the rear side of the tip protrusion 51A, which engages with the recessed part 45E of the stopper body 45.

On the other hand, the other end 51C side of the return member 51 protrudes from the rear surface 42D of the guide member 42 to the outside of the guide member 42. At the other end 51C of the return member 51, a handle 51D made of a cylindrical rod is fixed using means such as welding. The return member 51 can be moved in a direction away from the flange portion 7A of the left front mounting leg 7 while holding the handle 51D. At this time, the tip protrusion 51A of the return member 51 engages with the recessed part 43D of the wedge member 43, and the intermediate protrusion 51B of the return member 51 engages with the recessed part 45E of the stopper body 45.

Therefore, by rotating the operation bolt 49 (head part 49B) in the loosening direction and detaching the pressing side inclined surface 46A of the pressing tool 46 from the stopper side inclined surface 45C of the stopper body 45, the wedge member 43 can be moved away from the flange portion 7A by the return member 51. As a result, as shown in Figure 21, the wedge side inclined surface 43B of the wedge member 43 can be detached from the flange side inclined surface 7C of the flange portion 7A.

The frame coupling mechanism 41 according to the third embodiment has the configuration as described above. Next, to change the width dimension of the lower travel body 2 from the shortened dimension B to the extended dimension A, the process of releasing the connection between the left side frame 11 and the left front mounting leg 7 by the frame coupling mechanism 41 will be described.

When the frame coupling mechanism 41 is in a state of connecting the flange portion 7A of the left front mounting leg 7 and the left side frame 11, as shown in Figures 19 and 20, the stopper body 45 arranged within the wedge fitting hole 42G of the guide member 42 is pressed toward the wedge member 43 side by the pressing tool 46. As a result, the wedge member 43 is held in a position where the wedge side inclined surface 43B is in contact with the flange side inclined surface 7C of the flange portion 7A.

To release this connection state, rotate the operation bolt 49 in the loosening direction. As a result, as shown in Figure 22, the pressing tool 46 moves along the pressing tool fitting hole 42K of the guide member 42 to the right side surface 42F side, moving out of the range of movement of the stopper body 45. In this state, move the return member 51 along the return member mounting groove 42N of the guide member 42 in a direction away from the flange portion 7A of the left front mounting leg 7. The tip protrusion 51A of the return member 51 engages with the recessed part 43D of the wedge member 43, and the intermediate protrusion 51B of the return member 51 engages with the recessed part 45E of the stopper body 45. Therefore, the wedge member 43 and the stopper body 45 can be moved in a direction away from the flange portion 7A along with the return member 51. As a result, the wedge side inclined surface 43B of the wedge member 43 can be reliably detached from the flange side inclined surface 7C of the flange portion 7A.

In this way, by detaching the wedge-side inclined surface 43B of the wedge member 43 from the flange-side inclined surface 7C of the flange portion 7A, the connection state between the left front mounting leg 7 and the left side frame 11 is released. Similarly, by releasing the connection state between the left rear mounting leg 8 and the left side frame 11 using the frame coupling mechanism 41, the left side frame 11 becomes movable in the lateral direction. As a result, the width dimension of the lower travel body 2 can be changed from the shortened dimension B to the extended dimension A.

After changing the width dimension of the lower travel body 2 to the extended dimension A, the left side frame 11 is connected to the flange portion 7A of the left front mounting leg 7 using the frame coupling mechanism 41. Specifically, the operation bolt 49 is rotated in the tightening direction, and the pressing tool 46 is moved toward the left side 42E along the pressing tool fitting hole 42K of the guide member 42. At this time, the pressing-side inclined surface 46A of the moving pressing tool 46 comes into contact with the stopper-side inclined surface 45C of the stopper body 45, causing the stopper body 45 to move toward the wedge member 43 along the wedge fitting hole 42G of the guide member 42.

As a result, the wedge member 43 is pressed by the stopper body 45 and moves toward the flange portion 7A of the left front mounting leg 7, and the wedge-side inclined surface 43B of the wedge member 43 comes into contact with the flange-side inclined surface 7C within the space 19 formed between the guide member 42 and the flange portion 7A. At this time, the stopper body 45 is in contact with the wedge member 43, and the pressing-side inclined surface 46A of the pressing tool 46 fitted into the pressing tool fitting hole 42K of the guide member 42 is in contact with the stopper-side inclined surface 45C of the stopper body 45. Therefore, the movement of the wedge member 43 is limited by the stopper body 45 and the pressing tool 46. As a result, the wedge member 43 can be inserted between the guide member 42 (the inner peripheral surface of the wedge fitting hole 42G) and the flange portion 7A (the flange-side inclined surface 7C) to bring them into contact, allowing the left front mounting leg 7 and the left side frame 11 to be connected without gaps using the wedge member 43.

Similarly, the left rear mounting leg 8 and the left side frame 11 are connected using the frame coupling mechanism 41. As a result, with the width dimension of the lower travel body 2 changed to the extended dimension A, the left front mounting leg 7 and the left rear mounting leg 8 can be connected to the left side frame 11 without gaps using the frame coupling mechanism 41.

Here, in the third embodiment, the stopper member 44 of the frame coupling mechanism 41 includes a stopper body 45 installed to be movable in the same direction as the wedge member 43, and a pressing tool 46 installed to be movable in a direction intersecting the movement direction of the wedge member 43, which presses the stopper body 45 toward the wedge member 43 by coming into contact with the stopper body 45, and a pressing tool moving mechanism 47 for moving the pressing tool 46. The pressing tool moving mechanism 47 is also composed of a bolt hole 48 formed in the pressing tool 46 and an operation bolt 49 rotatably supported by the guide member 42 and screwed into the bolt hole 48 of the pressing tool 46.

According to this configuration, for example, by rotating the operation bolt 49 in the tightening direction and moving the pressing tool 46 along the pressing tool fitting hole 42K of the guide member 42, the pressing-side inclined surface 46A of the pressing tool 46 can be brought into contact with the stopper-side inclined surface 45C of the stopper body 45. As a result, the stopper body 45 moves along the wedge fitting hole 42G of the guide member 42 and presses the wedge member 43 toward the flange portion 7A. In this case, the movement amount of the wedge member 43 can be finely adjusted according to the tightening amount of the operation bolt 49. As a result, the wedge-side inclined surface 43B of the wedge member 43 can be brought into contact with the flange-side inclined surface 7C of the flange portion 7A with an appropriate pressing force, allowing the left front mounting leg 7 and the left side frame 11 to be connected without gaps. Furthermore, when the pressing-side inclined surface 46A of the pressing tool 46 comes into contact with the stopper-side inclined surface 45C of the stopper member 45, a large pressing force acts on the wedge member 43 due to the wedge principle. Therefore, the left front mounting leg 7 and the left side frame 11 can be fixed with high flexibility and reliability.

Furthermore, in the third embodiment, a recessed part 43D is formed on the outer peripheral surface of the wedge member 43 of the frame coupling mechanism 41. Additionally, the guide member 42 of the frame coupling mechanism 41 is equipped with a return member 51, where the tip protrusion 51A formed on one end in the length direction engages with the recessed part 43D, and the other end 51C in the length direction protrudes outside the guide member 42, moving the wedge member 43 away from the flange portion 7A. According to this configuration, the wedge-side inclined surface 43B of the wedge member 43 can be reliably detached from the flange-side inclined surface 7C of the flange portion 7A, allowing the connection state between the left front mounting leg 7 and the left side frame 11 to be easily and quickly released.

It should be noted that the frame coupling mechanism 41 according to the third embodiment illustrates a configuration that includes a return member 51 for moving the wedge member 43 away from the flange portion 7A. However, the return member 51 can also be applied to the frame coupling mechanism 16 according to the first embodiment and the frame coupling mechanism 31 according to the second embodiment.

In the third embodiment, an example is illustrated where the pressing tool 46 moves in a direction perpendicular to the movement direction of the wedge member 43. However, the present invention is not limited to this, and a pressing tool that moves in a direction intersecting at an acute angle to the movement direction of the wedge member may be used.

In the embodiment, the wedge members 20, 33, 43 are illustrated as being formed using circular cylinders with a circular cross-section. However, the present invention is not limited to this, and the wedge member may be formed using a prismatic shape with a polygonal cross-section, a conical frustum with a circular cross-section, or a pyramidal frustum with a polygonal cross-section.

In the embodiment, an example is illustrated where the frame coupling mechanism 16 connecting the flange portion 7A of the left front mounting leg 7 and the left side frame 11 is arranged on the upper surface 11A of the left side frame 11. However, the present invention is not limited to this, and the frame coupling mechanism 16 may be arranged on the lateral side surfaces of the left side frame 11. This also applies to the frame coupling mechanism 16 connecting the flange portion 8A of the left rear mounting leg 8 and the left side frame 11, the frame coupling mechanism 16 connecting the flange portion 9A of the right front mounting leg 9 and the right side frame 12, and the frame coupling mechanism 16 connecting the flange portion 10A of the right rear mounting leg 10 and the right side frame 12.

Furthermore, in the embodiment, an example is illustrated where the flange-side inclined surface 7C is integrally formed on the flange portion 7A of the left front mounting leg 7. However, the present invention is not limited to this, and a separate member with an inclined surface may be fixed to the flange portion using means such as welding. This also applies to the left rear mounting leg 8, the right front mounting leg 9, and the right rear mounting leg 10.

### DESCRIPTION OF REFERENCE NUMERALS

2: lower travel body
4: upper swing body
6: center frame
7: left front mounting leg
7A,8A,9A,10A: flange portion
7C,8B,9B,10B: flange side inclined surface
8: left rear mounting leg
9: right front mounting leg
10: right rear mounting leg
11: left side frame
11A,12A: upper surface
12: right side frame
16,31,41: frame coupling mechanism
17,32,42: guide member
17F,32F,42G: wedge fitting hole (circular hole)
19: space
20,33,43: wedge member
20A,33A,43A: one end
20B,33B,43B: wedge side inclined surface
20C,33C,43C: other end
21: block body (stopper member)
22: shim
34,44: stopper member
35,45: stopper body
36: pressing bolt (pressing member)
37: compression spring (biasing member)
43D: recessed part
46: pressing tool
47: pressing tool moving mechanism
48: bolt hole
49: operation bolt
51: return member

## Claims

1. A work machine comprising:
a lower travel body configured to propelled by itself; and
an upper swing body mounted to be rotatable on the lower travel body, and
the lower travel body includes: a center frame having a frame body to which the upper swing body is attached and mounting legs with a flange portion formed at the protruding ends in the lateral direction; side frames arranged on both sides of the center frame and attached to the flange portion; and frame coupling mechanisms for connecting the side frames to the mounting legs,
wherein the frame coupling mechanism includes:
a guide member attached to the side frame and forming a space between the flange portion and the guide member;
a wedge member installed between the flange portion and the guide member and configured to contact the flange portion and the guide member by moving along the guide member within the space; and
a stopper member installed on the guide member and configured to limit the movement of the wedge member at the position where the wedge member contacts the flange portion and the guide member.

2. The work machine according to claim 1,
wherein the flange portion has a flange side inclined surface formed inclined to the surface of the side frame, and
the wedge member is formed with a wedge side inclined surface that faces the flange side inclined surface in the movement direction of the wedge member, allowing for surface contact with the flange-side inclined surface.

3. The work machine according to claim 2,
wherein the wedge member is formed in a cylindrical shape with a circular cross-section, and the guide member has a circular hole formed for the wedge member to be slidably inserted.

4. The work machine according to claim 1,
wherein the wedge member has one end in the moving direction contacting the flange portion, and the stopper member is detachably installed between the other end of the wedge member in the moving direction and the guide member, and is constituted by a block body that contacts the other end of the wedge member when the one end of the wedge member contacts the flange portion.

5. The work machine according to claim 4,
wherein a shim is disposed between the other end of the wedge member and the block body, or between the guide member and the block body.

6. The work machine according to claim 1,
wherein the stopper member is configured to include a stopper body installed to be movable in the same direction as the wedge member and a pressing member that presses the stopper body toward the wedge member.

7. The work machine according to claim 6,
wherein a biasing member is installed between the wedge member and the stopper body to bias the wedge member in the direction of contact with the flange portion.

8. The work machine according to claim 1,
wherein the stopper member includes a stopper body installed to be movable in the same direction as the wedge member, a pressing tool installed to be movable in a direction intersecting the moving direction of the wedge member and pressing the stopper body toward the wedge member by contacting the stopper body, and a pressing tool moving mechanism for moving the pressing tool.

9. The work machine according to claim 8,
wherein the pressing tool moving mechanism is constituted by a bolt hole formed in the pressing tool and a bolt rotatably supported by the guide member and screwed into the bolt hole of the pressing tool.

10. The work machine according to claim 1,
wherein a recessed part is formed on the outer peripheral surface of the wedge member, and
the guide member has a return member installed, with one end side in the length direction engaging the recessed part and the other end side in the length direction protruding outside the guide member, to move the wedge member away from the flange portion.
